Europäisches Patentamt

European Patent Office

Office européen des brevets

(11) Veröffentlichungsnummer: **0 111 725**
**A1**

(12) **EUROPÄISCHE PATENTANMELDUNG**

(21) Anmeldenummer: **83111172.9**

(22) Anmeldetag: **09.11.83**

(51) Int. Cl.³: **A 01 B 63/16**
**A 01 D 35/14**

(30) Priorität: **22.11.82 US 443417**

(43) Veröffentlichungstag der Anmeldung:
**27.06.84 Patentblatt 84/26**

(84) Benannte Vertragsstaaten:
**DE FR GB IT**

(71) Anmelder: **DEERE & COMPANY**
**1 John Deere Road**
**Moline Illinois 61265(US)**

(72) Erfinder: **Kuhn, John Boyd**
**Route 2 Box 366A**
**Mayville Wisconsin 53050(US)**

(74) Vertreter: **Sartorius, Peter et al,**
**DEERE & COMPANY European Office, Patent**
**Department Postfach 503 Steubenstrasse 36-42**
**D-6800 Mannheim 1(DE)**

(54) **Tragvorrichtung für ein höhenverstellbares Laufrad eines landwirtschaftlich nutzbaren Arbeitsgerätes.**

(57) Ein höhenverstellbares Laufrad (27) für eine Mähwerksvorrichtung ist in einer Radgabel (26) gelagert, die in einer Gewindespindel (18) drehbar aufgenommen ist. Die Gewindespindel (18) ist in einer mit Gewinde versehenen Bohrung (20) einer an einem Tragrohr (15) vorgesehenen Nabe (16) höhenverstellbar angeordnet und weist hierzu einen Handgriff (30) auf, durch den die Gewindespindel (18) in einer Stellung des Handgriffs (30) am Tragrohr (15) festlegbar ist. Nach Lösen des Handgriffes (30) vom Tragrohr (15) kann die Gewindespindel (18) mittels des Handgriffes (30) gedreht werden, um somit die Höhenlage der Mähwerksvorrichtung zu verändern. Durch Heranklappen des Handgriffes (30) an die Rückseite der Nabe (16) läßt sich der Handgriff auch als Meßvorrichtung einsetzen. Der Handgriff weist eine quer verlaufende Halterung (38, 39) auf, die in Verbindung mit den auf der Nabe (16) vorgesehenen Maßlinien (45) die Höhenlage der Mähwerksvorrichtung angibt.

Fig. 3

Fig. 2

EP 0 111 725 A1

**Tragvorrichtung für ein höhenverstellbares Laufrad eines landwirtschaftlich nutzbaren Arbeitsgerätes**

Die Erfindung bezieht sich auf eine Tragvorrichtung für ein höhenverstellbares Laufrad eines landwirtschaftlich nutzbaren Arbeitsgerätes mit einem Tragrahmen zur Aufnahme einer vertikal verlaufenden Nabe, in deren Bohrung eine Achse drehbar aufgenommen ist, an deren unterem Ende eine Halterung zur Lagerung des Laufrades angeordnet ist.

Es ist bereits allgemein bekannt, an Schlepper anhängbare Rasenmäher auf Laufrädern abzustützen, wobei die Laufräder höhenverstellbar ausgebildet sein können. Die Verstellung derartiger Laufräder wird beispielsweise durch Verwendung von Distanzscheiben vorgenommen, die auf die vertikal verlaufende Schwenkachse des Laufrades aufgebracht werden können und somit die Höhenlage des Rasenmähers beeinflussen. Ebenfalls ist es möglich, derartige Laufräder an schwenkbaren Tragarmen anzuordnen, die über Rastelemente in verschiedenen Positionen arretiert werden können. Bei größeren Mähwerksvorrichtungen, die an Schleppern angebaut werden, ist eine derartige Verstellung des Laufrades sehr umständlich. Insbesondere läßt sich bei Verwendung von schwenkbaren Tragarmen, die über Rastelemente festgestellt werden, keine Feineinstellung der Höhenlage des Rasenmähers vornehmen. Der Einbau und Ausbau von Distanzscheiben ist sehr umständlich, da das Arbeitsgerät gehalten werden muß, wenn die Distanzscheibe ein- bzw. ausgebaut werden soll.

Demgegenüber liegt der Erfindung die Aufgabe zugrunde, die Tragvorrichtung für ein höhenverstellbares Laufrad derart auszubilden und anzuordnen, daß mit einfachen baulichen Mitteln eine Höhenverstellung des Laufrades in jede beliebige Stellung möglich ist, wobei nach Einnahme der gewünschten Stellung eine weitere Verstellung des Laufrades auf einfache Weise unterbunden werden kann.

Diese Aufgabe ist dadurch gelöst worden, daß die Bohrung in einer Gewindespindel vorgesehen ist, in der die Achse drehbar und vertikal unverstellbar aufgenommen ist, wobei die Gewindespindel Außengewinde aufweist und in der Innengewinde aufweisenden Nabe höhenverstellbar aufgenommen ist und hierzu mit einem Stellorgan ausgerüstet ist, das zur Drehsicherung der Gewindespindel an den Tragrahmen festlegbar ist. Durch die vorteilhafte Ausbildung und Anordnung der Tragvorrichtung in Verbindung mit der Gewindespindel, die in der Nabe höhenverstellbar gelagert ist, läßt sich eine genaue Verstellung des Laufrades mittels des Stellorganes vornehmen, wobei dieses gleichzeitig auch als Arretiervorrichtung einsetzbar ist. Hierzu ist es vorteilhaft, daß das Stellorgan als Handgriff ausgebildet ist und aus einem etwa U-förmig gebildeten Bügel besteht, dessen Schenkel endseitig nach innen gerichtete Zapfen aufweisen, die an die Gewindespindel angeschlossen sind, wobei der die Schenkel verbindende Steg derart geformt ist, daß er auf den Tragrahmen aufklemmbar ist. Eine vorteilhafte Arretierung wird dadurch erreicht, daß der Tragrahmen als einen kreisförmigen Querschnitt aufweisendes Tragrohr und der Steg als halbkreisförmiger dem Tragrohr angepaßter Bügel ausgebildet ist.

In weiterer Ausgestaltung der Erfindung ist es vorteilhaft, daß der Handgriff an der Gewindespindel vertikal schwenkbar angeschlossen ist und an eine Seite der Nabe derart heranschwenkbar ist, daß er mit auf der Nabe vorgesehenen Maßlinien als Anzeigevorrichtung zur Höhenbestimmung des Arbeitsgerätes einsetzbar ist, und daß die beiden Schenkel des Handgriffs über eine Halterung verbunden sind, die in Verbindung mit den Maßlinien in der etwa vertikal verlaufenden Lage des Handgriffs als Anzeigevorrichtung einsetzbar ist. Durch Verschwenken des Handgriffs in eine vertikal verlaufende Lage läßt dieser sich ohne weiteres als Anzeigevorrichtung in Verbindung mit den auf der Rückseite der Nabe vorgesehenen Maßlinien einsetzen, so daß die genaue Höhenlage des Arbeitsgerätes bestimmt werden kann, insbesondere dann, wenn ein Mähwerk verwendet wird, dessen Schneidmesser über ein Gehäuse verdeckt sind, so daß der Bodenabstand der Messer sich ohne Anzeigevorrichtung nicht genau bestimmen läßt. Somit erfüllt der Handgriff auf einfache Weise drei Funktionen, da er als Stellvorrichtung, als Arretiervorrichtung und als Anzeigevorrichtung einsetzbar ist, ohne daß an den einzelnen Teilen beim unterschiedlichen Einsatz des Handgriffs Veränderungen vorgenommen zu werden brauchen.

Im folgenden wird die Erfindung anhand von lediglich einen Ausführungsweg darstellenden Zeichnungen näher erläutert. Es zeigt:

Fig. 1  eine Seitenansicht eines Gartenschleppers mit einer Mähwerksvorrichtung,

Fig. 2  eine Befestigungsvorrichtung für ein Laufrad der Mähwerksvorrichtung,

Fig. 3  eine Schnittdarstellung entlang der Linie 3 - 3 gemäß Fig. 2.

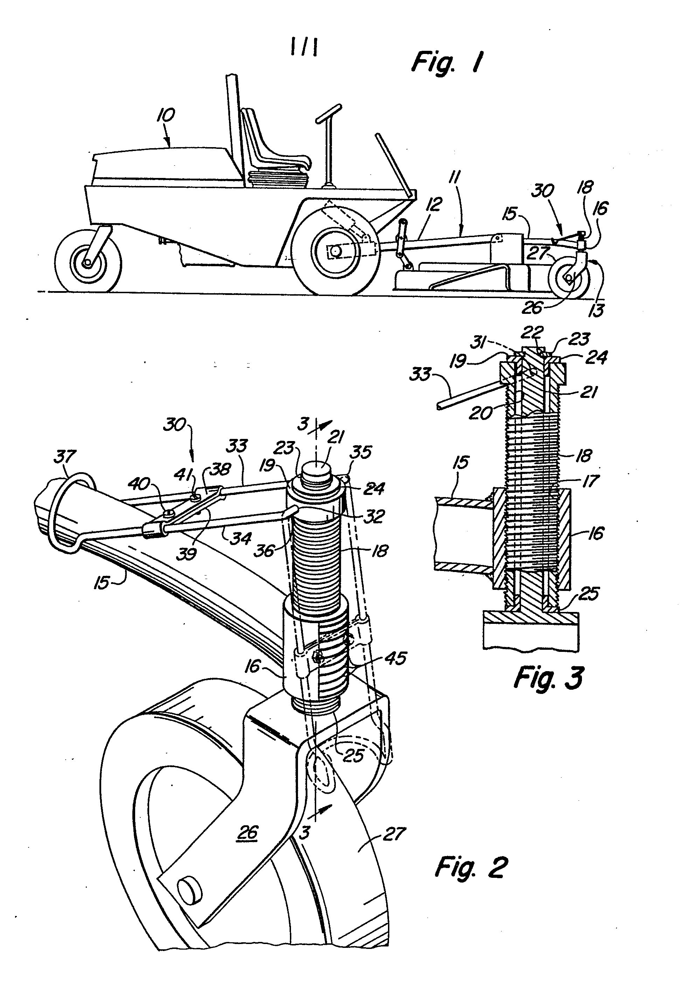

In der Zeichnung ist in Fig. 1 mit 10 ein Gartenschlepper bezeichnet, der an seiner Vorderseite eine Mähwerksvorrichtung 11 aufweist. Der Gartenschlepper 10 weist ferner an seiner Stirnseite eine Hubvorrichtung 12 auf, mittels der der hintere Teil der Mähwerksvorrichtung 11 angehoben und abgesenkt werden kann. Die Mähwerksvorrichtung 11 ist an ihrem vorderen Ende mittels zwei erfindungsgemäßen Laufradvorrichtungen 13 abgestützt. Da die beiden Laufradvorrichtungen 13 einander gleich sind, ist in der nachfolgenden Beschreibung lediglich die linke Laufradvorrichtung 13 ausführlich erläutert.

Die Laufradvorrichtung 13 weist eine Haupttragvorrichtung
auf, zu der ein Tragrohr 15 gehört, das an das vordere Ende
der Mähwerksvorrichtung 11 angeschlossen ist und sich von
dieser nach vorne erstreckt. Das vordere außen liegende
Ende des Tragrohrs 15 weist eine vertikal verlaufende Nabe
16 auf, die mit einem Innengewinde 17 ausgerüstet ist, in
das eine Gewindespindel 18 mit einem Drehlager 19 eingeschraubt ist. Das Drehlager 19 weist eine glatte vertikal
verlaufende Bohrung 20 auf, in der eine Drehachse 21 drehbar
aufgenommen ist. Die Drehachse 21 weist zur Aufnahme eines
Sicherungsringes 23 an ihrem oberen Ende eine Ringnut 22
auf. Das Drehlager 19 besteht jeweils aus einem oberen und
unteren Flansch 24 und 25 mit einer daran angeschlossenen
Buchse, die in das obere und untere Ende der Bohrung 20 der
Gewindespindel 18 mittels einer Preßpassung eingesetzt ist.
Hierdurch läßt sich die Drehachse 21 in dem Drehlager 19
frei drehen. Die Drehachse 21 weist an ihrem unteren Ende
eine Radgabel 26 auf, die zur Lagerung eines Laufrades 27
dient. An das obere Drehlager 19 ist ein Handgriff 30 angeschlossen, der aus einem geformten Gestänge gebildet ist
und dazu dient, das Drehlager 19 mit der Gewindespindel 18
in der Nabe 16 zu drehen. Das obere Drehlager 19 weist hierzu zwei gegenüberliegende sich radial erstreckende Öffnungen 31 und 32 auf. Der Handgriff 30 ist aus zwei parallel
zueinander verlaufenden Stangen 33 und 34 gebildet, die beiderseits des Drehlagers 19 verlaufen und die endseitig nach
innen laufende Zapfen 35 und 36 aufweisen, die in die Öffnungen 31 und 32 eingesetzt sind. Das den beiden Zapfen 35
und 36 gegenüberliegende Ende des Handgriffes 30 weist einen
nach oben gerichteten Bügel 37 auf, der dem Außenumfang des
Tragrohres 15 angepaßt ist, so daß er auf das Tragrohr 15
aufgeklemmt werden kann. Die beiden Stangen 33 und 34 sind
im mittleren Bereich über zwei Halterungen 38 und 39 miteinander verbunden. Die Halterungen weisen hierzu endseitig
paarweise zusammenfügbare Klammern auf, die auf die Stangen
33 und 34 aufsetzbar sind. Die die beiden Stangen 33 und 34 miteinander verbindenden Halterungen 38 und 39 liegen gegeneinander auf und sind mittels Schraubenbolzen 40 und 41 gesichert. Die Halterungen 38 und 39 erfüllen zwei Funktionen. Sie halten nach erfolgter Montage die beiden gegenüberliegenden Zapfen 35 und 36 der Stangen 33 und 34 in den entsprechenden Öffnungen 31 und 32, und sie dienen als Meßvorrichtung, um auf diese Weise das Ein- und Ausschrauben der Gewindespindel 18 in der Nabe 16 besser anzeigen zu können. Ist also der Handgriff 30 in die in Fig. 2 dargestellte, gestrichelte Stellung verschwenkt, so läßt sich mittels der auf der Vorderseite der Nabe 16 vorgesehenen Maßlinien 45 der Bodenabstand des vorderen Endes der Mähwerksvorrichtung 11 ablesen.

Wie aus Fig. 2 hervorgeht, ist der Bügel 37 des Handgriffs 30 auf das Tragrohr 15 aufgesetzt (siehe die in ausgezogenen Linien dargestellte Stellung des Handgriffs 30). Der Bügel 37 des Handgriffes 30 läßt sich dabei so weit aufbiegen, daß eine ausreichende Klemmwirkung zur Sicherung des Bügels 37 auf dem Tragrohr 15 gewährleistet ist. Wird es beispielsweise gewünscht, die Höhe des vorderen Endes der Mähwerksvorrichtung 11 zu verändern, so braucht lediglich der Bügel 37 des Handgriffes 30 von dem Tragrohr 15 abgezogen zu werden, so daß er als Hebelarm zum Drehen des Drehlagers 19 verwendet werden kann. Ist beispielsweise die richtige Höheneinstellung des Laufrades 27 vorgenommen worden und somit die entsprechende Höhenlage der Mähwerksvorrichtung 11, so wird der Handgriff 30 nach unten verschwenkt (siehe die in gestrichelten Linien dargestellte Lage des Handgriffes 30), wobei er dann nach unten hängt, so daß die Halterungen 38 und 39 eine Lage vor den an der Vorderseite der Nabe 16 vorgesehenen Maßlinien 45 einnehmen. Wie bereits ausgeführt, dienen die Halterungen 38 und 39 als Anzeigevorrichtung in Verbindung mit den Maßlinien 45 auf der Nabe 16. Bei einer entsprechenden Verstellung des Drehlagers 19 in der Nabe 16 läßt sich über die Maßlinien die gewünschte Höhenlage der Mähwerksvorrichtung 11 genau festlegen, insbesondere auch dann, wenn
über das Gehäuse der Mähwerksvorrichtung die Mähwerksmesser
verdeckt sind.

Patentansprüche

1. Tragvorrichtung für ein höhenverstellbares Laufrad (27) eines landwirtschaftlich nutzbaren Arbeitsgerätes mit einem Tragrahmen (15) zur Aufnahme einer vertikal verlaufenden Nabe (16), in deren Bohrung eine Achse (21) drehbar aufgenommen ist, an deren unterem Ende eine Halterung (Radgabel 26) zur Lagerung des Laufrades (27) angeordnet ist, dadurch gekennzeichnet, daß die Bohrung (20) in einer Gewindespindel (18) vorgesehen ist, in der die Achse (21) drehbar und vertikal unverstellbar aufgenommen ist, wobei die Gewindespindel (18) Außengewinde aufweist und in der Innengewinde aufweisenden Nabe (16) höhenverstellbar aufgenommen ist und hierzu mit einem Stellorgan (Handgriff 30) ausgerüstet ist, das zur Drehsicherung der Gewindespindel an den Tragrahmen (15) festlegbar ist.

2. Tragvorrichtung nach Anspruch 1, dadurch gekennzeichnet, daß das Stellorgan als Handgriff (30) ausgebildet ist und aus einem etwa U-förmig gebildeten Bügel (37) besteht, dessen Schenkel (Stange 33, 34) endseitig nach innen gerichtete Zapfen (35) aufweisen, die an die Gewindespindel (18) angeschlossen sind, wobei der die Schenkel verbindende Steg derart geformt ist, daß er auf den Tragrahmen (15) aufklemmbar ist.

3. Tragvorrichtung nach den Ansprüchen 1 und 2, dadurch gekennzeichnet, daß der Tragrahmen als einen kreisförmigen Querschnitt aufweisendes Tragrohr (15) und der Steg als halbkreisförmiger dem Tragrohr angepaßter Bügel (37) ausgebildet ist.

4. Tragvorrichtung nach Anspruch 1, dadurch gekennzeichnet, daß der Handgriff (30) an der Gewindespindel (18) vertikal schwenkbar angeschlossen ist und an eine Seite der Nabe (16) derart heranschwenkbar ist, daß er mit auf der Nabe vorgesehenen Maßlinien (45) als Anzeigevorrichtung zur Höhenbestimmung des Arbeitsgerätes einsetzbar ist.

5. Tragvorrichtung nach einem oder mehreren der vorhergehenden Ansprüche, dadurch gekennzeichnet, daß die beiden Schenkel des Handgriffs (30) über eine Halterung (38, 39) verbunden sind, die in Verbindung mit den Maßlinien (45) in der etwa vertikal verlaufenden Lage des Handgriffs (30) als Anzeigevorrichtung einsetzbar ist.

1/1

Fig. 1

Fig. 2

Fig. 3

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-C-1 156 265  (F. HEGER & SOHN) <br> * Spalte 1, Zeilen 1-16; Figuren 1, 2 * | 1 | A 01 B   63/16 <br> A 01 D   35/14 |
| | --- | | |
| Y | AT-B-   82 695  (MASCHINENFABRIK SCHEFFELDT GMBH) <br> * Seite 1, Zeilen 1-7; Figur 1 * | 1 | |
| | --- | | |
| Y | DE-C-   237 077  (J. McLAREN et al.) <br> *   Seite 2, Zeilen 74-85; Figur 3 * | 1 | |
| | --- | | |
| A | AT-B-   68 027  (F. SIGL) <br> * Ganzes Dokument * | 1 | |
| | ----- | | **RECHERCHIERTE SACHGEBIETE (Int. Cl. ³)** <br><br> A 01 B   63/00 <br> A 01 D   35/00 |

Der vorliegende Recherchenbericht wurde für alle Patentansprüche erstellt.

| Recherchenort <br> BERLIN | Abschlußdatum der Recherche <br> 10-02-1984 | Prüfer <br> FEY G. |
|---|---|---|